# FASCICULE DE BREVET EUROPEEN

(11) **EP 3 688 235 B1**
(45) Date de publication et mention de la délivrance du brevet: **01.02.2023**
(21) Numéro de dépôt: 18780180.8
(22) Date de dépôt: 11.09.2018
(51) Int. Cl.: E02D 29/14, H01Q 1/38, H04B 7/00

(54) **COUVERCLE POUR CHAMBRE DE VISITE TRANSPARENT VIS-À-VIS DES SIGNAUX RADIO-FRÉQUENCE**
DECKEL FÜR INSPEKTIONSSCHACHT, DURCHLÄSSIG FÜR RADIOWELLEN
COVER FOR AN INSPECTION CHAMBER TRANSPARENT FOR RADIO SIGNALS

(30) Priorité: 26.09.2017 FR 1758880
(43) Date de publication de la demande: 05.08.2020
(73) Titulaire: Orange, 92130 Issy-les-Moulineaux (FR)
(72) Inventeur: LE SAOUT, Jean-Yves, 92326 Châtillon Cedex (FR); COIFFARD, Laurent, 92326 Châtillon Cedex (FR); DAVRANCHE, Dominique, 92326 Châtillon Cedex (FR)
(86) Numéro de dépôt international: PCT/FR2018/052212
(87) Numéro de publication internationale: WO 2019/063901

(56) Documents cités:
- WO-A1-2017/074205
- CN-U- 202 430 746
- CN-U- 203 403 444
- DE-B3-102015 007 505
- FR-A1- 2 747 867
- JP-A- H1 166 484
- JP-A- 2001 156 514
- KR-A- 20170 062 354

## Description

### Domaine de l'invention

La présente invention concerne un couvercle pour chambre de visite, ladite chambre étant adaptée pour contenir un dispositif de transmission de signal radio fréquence. Un couvercle selon le préambule de la revendication 1 est connu du document JP H 11 66 484 A.

### Arrière-plan de l'invention

A l'heure actuelle, les chambres de visite qui sont utilisées dans les réseaux urbains, tels que les réseaux d'eau, d'électricité, de gaz ou de télécommunications sont généralement en béton et installées en terre avec la partie haute ouverte et affleurant au niveau du sol (chaussée, trottoir, terreplein...). Ces chambres sont pourvues d'une ouverture fermée par un couvercle qui peut être également en béton mais qui est le plus souvent en métal, tel que par exemple en fonte, en acier ou en aluminium. Ainsi, un tel couvercle présente une résistance mécanique élevée qui permet la circulation de véhicules, même lourds comme les camions.

De telles chambres de visite sont de plus en plus « connectées », en ce sens qu'elles abritent au moins un dispositif de transmission de signaux radio fréquence permettant d'émettre/recevoir des informations via un réseau de communication sans fil. Selon un exemple, un dispositif de transmission précité est relié à un ou plusieurs capteurs d'impulsions aptes à récupérer des données de consommation d'eau, d'électricité, de gaz ou de télécommunications qui sont ensuite transmises par le dispositif de transmission à un terminal distant (ex : ordinateur, tablette, téléphone mobile), via un réseau sans fil. Il est ainsi possible de suivre à distance, automatiquement, et quasiment en temps réel, les relevés de consommation des usagers, en vue de fournir à ces derniers une facturation fiable. De tels capteurs sont également utilisés pour identifier et localiser des dégradations affectant ces réseaux, telle que des fuites d'eau ou de gaz, des ruptures de câbles électriques, etc..., les informations de localisation et d'identification étant transmises également via un réseau de communication sans fil à un terminal distant, ce qui permet aux équipes de maintenance d'intervenir au plus vite.

Un inconvénient de telles chambres connectées réside dans le fait qu'elles ne favorisent pas une bonne propagation des signaux radio fréquence émis ou reçus par les dispositifs de transmission radio fréquence qu'elles abritent, notamment pour les raisons ci-dessous :
- elles sont installées en terre,
- elles sont le plus souvent constituées en métal ou en béton,
- le couvercle qui les recouvre est également le plus souvent constitué par une plaque métallique ou en en béton.

Il en résulte que la structure actuelle des chambres de visite et de leurs couvercles correspondants constitue un frein au développement à grande échelle de telles installations de transmission radio fréquence. L'utilisation de ces installations reste donc très limitée.

### Objet et résumé de l'invention

Un des buts de l'invention est de remédier à des inconvénients de l'état de la technique précité.

A cet effet, un objet de la présente invention concerne un couvercle pour chambre de visite, une telle chambre étant pourvue d'une ouverture d'accès et étant adaptée pour contenir un dispositif de transmission de signal radio fréquence, le couvercle comprenant une paroi destinée à recouvrir l'ouverture d'accès de la chambre de visite lorsque le couvercle est en position fermée.

Un tel couvercle est remarquable en ce que la paroi du couvercle est percée d'au moins une ouverture traversante remplie d'un matériau d'étanchéité du couvercle, ledit matériau s'étendant sur la surface de la paroi du couvercle qui est orientée en direction de l'intérieur de la chambre de visite lorsque le couvercle est en position fermée, ledit matériau étant constitué d'une matière transparente à la propagation d'un signal radio fréquence transmis depuis et/ou vers le dispositif de transmission.

Une telle configuration du couvercle permet d'améliorer la propagation des signaux radio fréquence aussi bien vers l'extérieur de la chambre que vers l'intérieur de la chambre, et cela, indépendamment de la matière dont sont constitués le couvercle et la chambre de visite qu'il recouvre. Une telle propagation est facilitée par le fait que le dispositif de transmission de signal radio fréquence est uniquement séparé de l'extérieur de la chambre par le couvercle formé de l'ouverture traversante et du matériau d'étanchéité du couvercle dont la matière est avantageusement adaptée pour être aussi transparente vis-à-vis des signaux radiofréquence.

Grâce à cette configuration, le couvercle est en outre simple à fabriquer et peu coûteux. Par ailleurs, une telle configuration peut être avantageusement mise en oeuvre aussi bien sur des couvercles pour chambre de visite existants ou futurs, que ces couvercles soient constitués d'une matière étanche aux signaux radio fréquence, telle que le béton, la fonte, l'acier ou l'aluminium, ou d'une matière non étanche aux signaux radio fréquence, telle que le plastique (polychlorure de vinyle (PVC), polypropylène, etc...).

Selon un mode de réalisation particulier, la paroi du couvercle est percée de deux ouvertures traversantes longitudinales qui sont disposées perpendiculairement l'une par rapport à l'autre.

Une telle configuration des ouvertures permet de favoriser la propagation aussi bien de la composante verticale du signal radio fréquence que de sa composante horizontale.

Selon encore un mode de réalisation particulier, le matériau d'étanchéité contient au moins un élément rayonnant.

Une telle configuration permet d'augmenter les performances de rayonnement des signaux radio fréquence vers l'extérieur, comme vers l'intérieur de la chambre de visite. Par ailleurs, une telle configuration est beaucoup plus compacte que dans l'art antérieur.

Selon encore un mode de réalisation particulier, ledit au moins un élément rayonnant comprend des première et deuxième parties reliées ensemble par un élément conducteur recouvert d'un blindage et isolé électriquement de ce blindage, ledit au moins élément rayonnant étant agencé au moins en partie dans le matériau d'étanchéité de façon à ce que lorsque le couvercle est en position fermée :
- la première partie de l'élément rayonnant soit agencée, selon une orientation donnée par rapport à la paroi du couvercle, à proximité de l'extrémité de l'ouverture traversante du couvercle qui débouche vers l'extérieur du couvercle,
- la deuxième partie de l'élément rayonnant soit agencée, selon une orientation donnée par rapport à la paroi du couvercle, à proximité de l'extrémité de l'ouverture traversante qui débouche vers l'intérieur de la chambre de visite,
- le blindage étant en outre relié à la paroi du couvercle formant masse.

Une telle structure de l'élément rayonnant et une telle disposition de l'élément rayonnant au moins en partie dans le matériau d'étanchéité du couvercle permet d'optimiser les performances de rayonnement des signaux radio fréquence vers l'extérieur, comme vers l'intérieur de la chambre de visite.

Selon encore un mode de réalisation particulier, le matériau d'étanchéité du couvercle comporte une protubérance à l'extrémité de l'ouverture traversante qui débouche vers l'extérieur du couvercle, lorsque le couvercle est en position fermée, ladite protubérance incorporant un dispositif de diffraction.

Un tel agencement d'un dispositif de diffraction en saillie sur le couvercle permet avantageusement de générer des diffractions qui favorisent la propagation des ondes radio électriques selon au moins deux directions présentant chacune un angle de valeur faible (par exemple 3 à 5 degrés) par rapport à une droite qui peut-être par exemple :
- horizontale, dans le cas où le couvercle en position fermée s'étend horizontalement,
- verticale, dans le cas où le couvercle en position fermée s'étend verticalement.

Les différents modes ou caractéristiques de réalisation précités peuvent être ajoutés indépendamment ou en combinaison les uns avec les autres, au couvercle pour chambre de visite tel que défini ci-dessus.

### Brève description des dessins

D'autres caractéristiques et avantages apparaîtront à la lecture de modes de réalisation préférés décrits en référence aux figures dans lesquelles:
- les figures 1A et 1B représentent respectivement la vue de dessus et la vue en coupe d'un couvercle pour chambre de visite, conformément à un premier mode de réalisation,
- les figures 2A et 2B représentent respectivement la vue de dessus et la vue en coupe d'un couvercle pour chambre de visite, conformément à un deuxième mode de réalisation,
- les figures 3A et 3B représentent respectivement la vue de dessus et la vue en coupe d'un couvercle pour chambre de visite, conformément à un troisième mode de réalisation,
- les figures 4A à 4D représentent en vue de coupe respectivement quatre variantes du mode de réalisation des figures 3A et 3B,
- les figures 5A et 5B représentent respectivement la vue de dessus et la vue en coupe d'un couvercle pour chambre de visite, conformément à un quatrième mode de réalisation,
- les figures 6A et 6B représentent en vue de dessus respectivement deux variantes de réalisation des couvercles représentés sur les figures 1A à 5B,
- les figures 7A et 7B représentent en vue de coupe respectivement deux variantes de réalisation du couvercle représenté sur les figures 2A et 2B.

### Exemples de mise en oeuvre

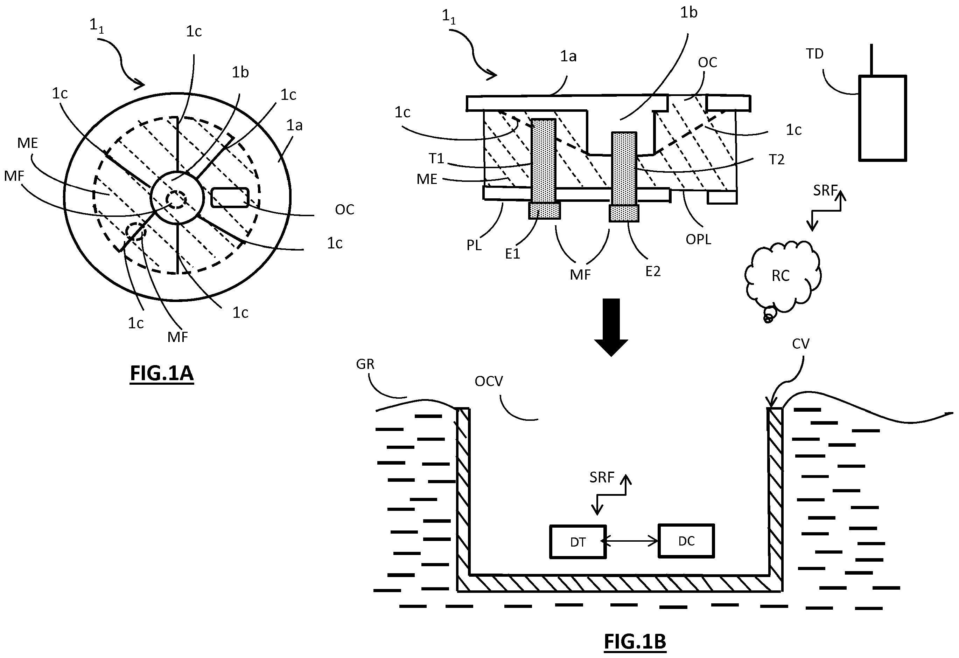

En référence aux figures 1A et 1B, on décrit un premier mode de réalisation du couvercle pour chambre de visite selon l'invention.

En référence aux figures 1A et 1B, le couvercle pour chambre de visite est désigné par la référence 1₁. Il comporte une paroi plane 1a qui, dans l'exemple représenté, a une forme sensiblement circulaire. Bien entendu, la paroi plane 1a pourrait présenter d'autres formes correspondantes à la forme de l'ouverture de la chambre de visite à recouvrir qui n'est pas obligatoirement de forme circulaire. A cet effet, la paroi plane 1a pourrait être de forme rectangulaire, carrée, ovale, ou autres.

Comme représenté sur la figure 1B, une chambre de visite CV est installée sous le sol GR qui est par exemple une chaussée, un trottoir, un terreplein, un plancher, une chape, etc...

Cet exemple n'est en rien limitatif. En effet, selon un autre exemple, la chambre de visite CV pourrait être installée derrière une paroi verticale, tel qu'un mur, un coffrage, etc...

Dans l'exemple représenté, la chambre de visite CV présente une paroi dont la section est en forme de U. Bien entendu, d'autres formes de sections sont possibles selon la configuration ou la nature du réseau urbain. La chambre de visite CV est pourvue d'une ouverture OCV débouchant au niveau du sol GR. Une telle ouverture OCV permet l'accès à l'intérieur de la chambre de visite en vue de réaliser par exemple des opérations de contrôle, de maintenance, etc...sur des éléments (câbles, canalisations, compteurs, etc...) qui composent les réseaux d'eau, d'électricité, de gaz ou de télécommunications.

La chambre de visite CV est adaptée pour contenir un dispositif DC de collecte de données de fonctionnement du réseau urbain considéré. Dans l'exemple représenté, le dispositif de collecte de données DC est un capteur d'impulsions destiné à effectuer un relevé de la consommation d'eau, de gaz, etc... fourni par le réseau considéré, pour chaque usager. Selon un autre exemple et en fonction de la nature et de la configuration du réseau urbain considéré, le dispositif DC de collecte de données pourrait être un détecteur de fuite d'eau, un détecteur de fumée, un détecteur de rupture de câbles, etc...

Le dispositif de collecte DC est relié à un dispositif DT de transmission de signaux radio fréquence. Le dispositif de transmission DT est en charge d'encapsuler dans un signal radio fréquence SRF les données de fonctionnement relevées par le dispositif de collecte DC et de transmettre le signal radio fréquence SRF vers un terminal distant TD, tel que par exemple un ordinateur, un téléphone portable, un smartphone (« téléphone intelligent »), une tablette, etc..., via un réseau de communication RC de type cellulaire ou encore dédié à l'internet des objets.

Lorsque le couvercle 1₁ est en position fermée, ce dernier repose sur l'ouverture OCV de la chambre de visite CV de façon à recouvrir entièrement cette ouverture.

De façon classique, et de ce fait non représenté, le couvercle 1₁ peut être par exemple poussé manuellement sur l'ouverture OCV, les bords du couvercle reposant en appui sur la chaussée. Selon un autre exemple classique, le couvercle 1₁ est articulé sur une rehausse apte à s'emboîter dans l'ouverture d'accès de la chambre de visite. En position fermée, le couvercle est alors rabattu par pivotement jusqu'à recouvrir l'ouverture d'accès de la chambre de visite.

La paroi 1a du couvercle 1₁ est par exemple métallique (ex : fonte, acier, aluminium, etc...). Selon un autre exemple, la paroi 1a du couvercle 1₁ est en matière plastique (ex : polychlorure de vinyle (PVC), polypropylène, etc...).

De façon classique, la paroi 1a du couvercle est par exemple pourvue d'une âme centrale 1b et de plusieurs nervures de renfort 1c qui sont venues de matière avec la paroi 1a et qui s'étendent respectivement en saillie dans l'ouverture OCV de la chambre de visite CV, lorsque le couvercle 1₁ est en position fermée.

Dans l'exemple représenté, il existe six nervures de renfort. Cet exemple n'est en rien limitatif et le nombre de nervures de renfort dépend de la résistance aux contraintes souhaitée pour le couvercle 1₁.

Selon l'invention, la paroi 1a du couvercle 1₁ est percée d'une ouverture traversante OC dont la section est par exemple quadrangulaire. Selon d'autres exemples non représentés, la section de l'ouverture traversante peut être conique, cylindrique, ovale, etc...La taille, la forme et le positionnement de l'ouverture traversante OC dépendent des contraintes mécaniques souhaitées pour le couvercle 1₁.

Selon l'invention, l'ouverture traversante OC est en outre remplie d'un matériau d'étanchéité ME du couvercle 1₁ qui est monobloc et qui s'étend également sur la surface de la paroi 1a du couvercle qui est orientée vers l'intérieur de la chambre de visite CV lorsque le couvercle 1₁ est en position fermée. Un tel matériau d'étanchéité ME permet d'éviter l'écoulement de fluides (ex : eau, huile, solvant, etc...) ou l'insertion de particules diverses (ex : graviers, détritus, matière alimentaire, poussière, etc...) dans l'ouverture OCV de la chambre de visite CV, lorsque le couvercle 1₁ est en position fermée.

Selon l'invention, le matériau d'étanchéité ME est en outre avantageusement constitué d'une matière transparente à la propagation de tout signal radio fréquence SRF transmis depuis et/ou vers le dispositif de transmission DT, lorsque le couvercle 1, est en position fermée.

Cette matière transparente présente des propriétés mécaniques adaptées aux contraintes mécaniques envisagées pour le couvercle 1₁. Ainsi, selon un exemple, la matière transparente est un polymère, telle que le caoutchouc, le plastique, le Téflon. Selon un exemple de réalisation préférentiel, le matériau d'étanchéité ME est en caoutchouc EPDM (acronyme de éthylène-propylène-diène monomère) qui, au-delà de posséder d'excellentes propriétés d'isolation électrique, est résistant au froid, à la chaleur, aux UV, à l'abrasion, à l'eau, aux huiles et aux détergents. Une telle matière a en outre l'avantage de pouvoir être teintée de la même couleur que le couvercle 1₁ de manière à en reconstituer l'homogénéité visuelle, lorsque celui-ci est en position fermée.

Selon un autre exemple, la matière transparente qui constitue le matériau d'étanchéité ME est en verre feuilleté ou trempé.

Dans l'exemple représenté, le matériau d'étanchéité est fixé à la paroi 1a du couvercle 1₁ par l'intermédiaire d'une plaque PL qui est rendue solidaire de la paroi 1a du couvercle 1₁ à l'aide de tout moyen de fixation MF classique, tel que par exemple des vis, des tiges filetées et leurs écrous correspondants, des rivets, etc.....

Dans l'exemple représenté, les moyens de fixation MF sont constitués par deux tiges filetées T1, T2 et leurs écrous correspondants E1, E2, dont l'une est vissée dans l'âme centrale 1b de la paroi 1a du couvercle 1₁ et l'autre est vissée dans une nervure 1c de la paroi 1a.

Selon un autre exemple non représenté, les moyens de fixation MF pourraient être constitués par deux tiges filetées emmanchées à force dans la paroi 1a du couvercle 1₁ et être « matées » ou rivetées au niveau de la plaque PL.

La plaque PL présente en outre des dimensions correspondantes aux dimensions internes de l'ouverture d'accès OCV de la chambre de visite CV. La plaque PL est en outre percée d'un trou traversant OPL qui présente les mêmes dimensions que le trou traversant OC pratiqué dans la paroi 1a du couvercle et qui est disposé en regard du trou traversant OC, une fois la plaque PL fixée à la paroi 1a, parallèlement à la paroi 1a du couvercle 1₁.

Afin d'améliorer encore davantage l'étanchéité du couvercle 1₁, un joint d'étanchéité non représenté, par exemple en silicone, peut être agencé sur le pourtour de l'ouverture traversante OC de la paroi 1a du couvercle.

Une telle configuration du couvercle 1₁ qui vient d'être décrite ci-dessus est particulièrement avantageuse dans le sens où elle est envisageable aussi bien sur des couvercles de chambre de visite existants que sur de futurs couvercles de chambre de visite.

Le couvercle 1₁ ainsi obtenu est muni d'un « bouchon » étanche qui est compact, facile à installer et peu coûteux et qui, lorsque le couvercle est en position fermée, permet d'améliorer sensiblement la propagation des signaux radio fréquence aussi bien vers l'extérieur de la chambre de visite CV que vers l'intérieur de cette dernière, et cela, indépendamment de la matière dont sont constitués le couvercle 1₁ et la chambre de visite CV.

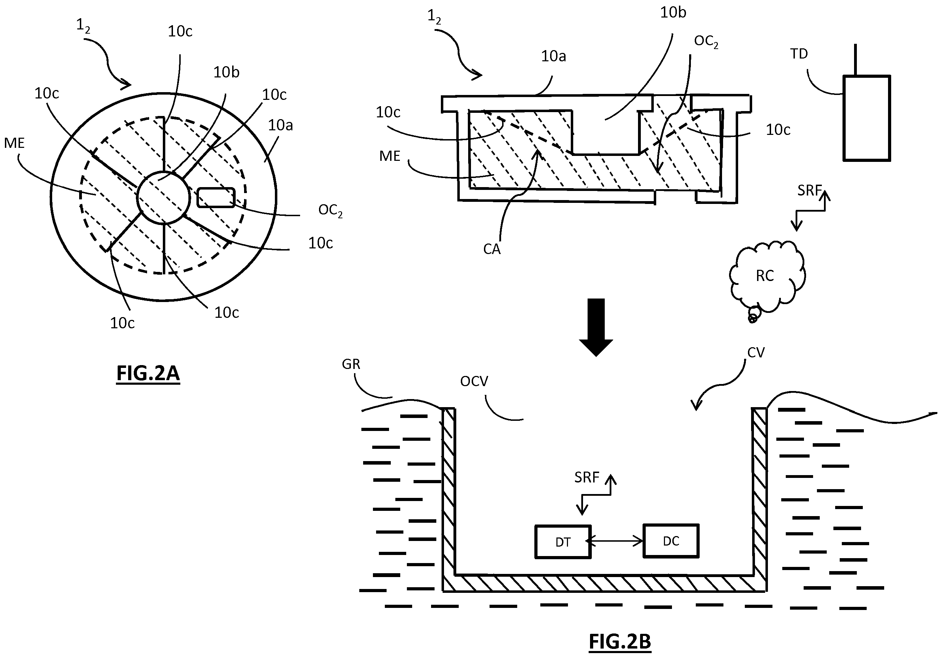

Selon un deuxième mode de réalisation représenté sur les figures 2A et 2B, il est proposé une configuration du couvercle pour chambre de visite qui n'est adaptée que pour des couvercles neufs.

A cet effet, le couvercle 1₂ représenté sur les figures 2A et 2B diffère de celui qui est représenté sur les figures 1A et 1B en ce sens qu'au lieu d'être pourvu d'une plaque de fond PL vissée à la paroi 1a, le couvercle 1₂ présente une paroi 10a de section rectangulaire de façon à former une cavité CA qui est orientée vers l'intérieur de la chambre de visite CV lorsque le couvercle 1₂ est en position fermée. Le couvercle 1₂ est en outre percé de part en part d'une ouverture traversante OC₂ qui est configurée de façon à ce que lorsque le couvercle 1₂ est en position fermée, l'une des extrémités de l'ouverture traversante OC₂ débouche vers l'extérieur et l'autre extrémité de l'ouverture traversante OC₂ débouche vers l'intérieur de la chambre de visite CV.

Dans l'exemple représenté, l'ouverture traversante OC₂ a une section quadrangulaire. Selon d'autres exemples non représentés, la section de l'ouverture traversante OC₂ peut être conique, cylindrique, ovale, etc... La taille, la forme et le positionnement de l'ouverture traversante OC₂ dépendent des contraintes mécaniques souhaitées pour le couvercle 1₂.

Comme dans le mode de réalisation représenté sur les figures 1A et 1B, la paroi 10a du couvercle 1₂ est par exemple pourvue d'une âme centrale 10b et de plusieurs nervures de renfort 10c qui sont venues de matière avec la paroi 10a et qui s'étendent respectivement en saillie dans l'ouverture OCV de la chambre de visite CV, lorsque le couvercle 1₂ est en position fermée.

De façon similaire au mode de réalisation représenté sur les figures 1A et 1B, l'ouverture traversante OC₂ est en outre remplie d'un matériau d'étanchéité ME qui est en tout point identique à celui décrit en référence aux figures 1A et 1B. Dans l'exemple représenté sur les figures 2A et 2B, le matériau d'étanchéité est injecté dans la cavité CA du couvercle 1₂, par l'ouverture traversante OC₂, via tout procédé industriel adapté.

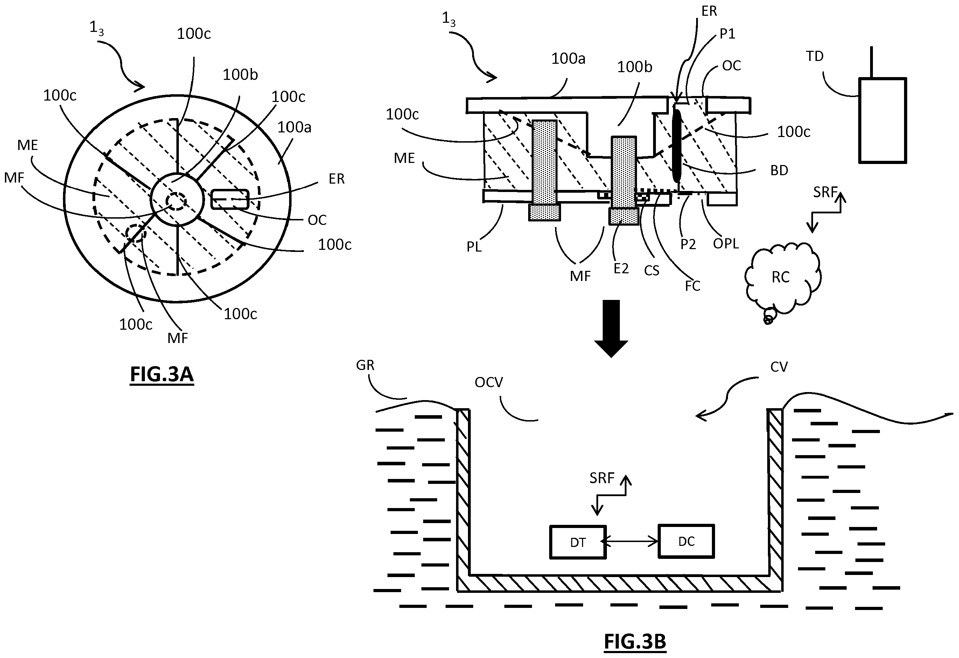

On va maintenant décrire un troisième mode de réalisation du couvercle selon l'invention, en référence aux figures 3A et 3B.

Dans l'exemple représenté, le couvercle est désigné par la référence 1₃. Le couvercle 1₃ est par exemple identique au couvercle 1₁ des figures 1A et 1B. A cet effet, il comporte une paroi plane 100a, une âme centrale 100b et des nervures de renfort 100c identiques à celles du couvercle 1₁.

Le couvercle 1₃ se distingue du couvercle 1₁ par le fait qu'il comporte un élément rayonnant ER.

Plus particulièrement, dans l'exemple représenté, l'élément rayonnant ER est noyé complètement dans le matériau d'étanchéité ME.

Dans l'exemple représenté, l'élément rayonnant ER est une antenne imprimée contenant deux pôles P1, P2 qui sont reliés ensemble par un conducteur (non représenté) recouvert d'un blindage BD et isolé électriquement de ce dernier. L'élément rayonnant ER est agencé dans le matériau d'étanchéité ME de telle manière que, lorsque le couvercle 1₃ est en position fermée :
- le pôle P1 s'étend à proximité de l'ouverture traversante OC du couvercle 1₃, à environ 5 à 10 mm de la surface externe de la paroi 100a du couvercle 1₃ dans le but de protéger l'antenne des contraintes extérieures (roulement de véhicules, piétinement, chute d'objets, etc...),
- le pôle P2 s'étend à proximité du trou traversant OPL de la plaque PL du couvercle 1₃, en étant sensiblement parallèle au pôle P1,
- le blindage BD s'étend dans le matériau d'étanchéité ME entre les pôles P1 et P2.

Le blindage BD est en outre relié à une rondelle crantée ou une cosse CS de type métallique, via un fil métallique conducteur FC.

Ainsi, lors du montage du couvercle 1₃, quand la plaque PL est vissée à la paroi 100a de ce dernier en serrant les écrous E1 et E2, le blindage BD est relié électriquement au couvercle 1₃, réalisant de cette manière une mise à la masse du blindage BD.

Dans l'exemple représenté :
- le pôle P1 s'étend selon une orientation sensiblement parallèle à celle de la paroi 100a du couvercle 1₃,
- le pôle P2 s'étend selon une orientation sensiblement parallèle à celle de la plaque PL du couvercle 1₃,
- le blindage BD s'étend perpendiculairement aux pôles P1 et P2.

Bien entendu, l'orientation du pôle P1 par rapport à la paroi 100a du couvercle 1₃ et l'orientation du pôle P2 par rapport à la plaque PL du couvercle peuvent varier selon la configuration du couvercle.

Ainsi, selon d'autres exemples :
- le pôle P1 pourrait être incliné vers l'intérieur du couvercle, en formant un angle donné par rapport à la paroi 100a du couvercle,
- le pôle P2 pourrait être incliné soit en direction de la plaque 100a du couvercle, soit vers l'intérieur de la chambre de visite, en formant un angle donné par rapport à la plaque PL du couvercle.

Dans cet exemple, le blindage BD relierait alors les pôles P1 et P2 sans être perpendiculaire à ces derniers.

Selon un exemple particulier :
- le pôle P1 pourrait être incliné vers l'intérieur du couvercle, en étant perpendiculaire à la paroi 100a du couvercle,
- le pôle P2 pourrait être incliné vers l'intérieur de la chambre de visite, en étant perpendiculaire à la plaque PL du couvercle.

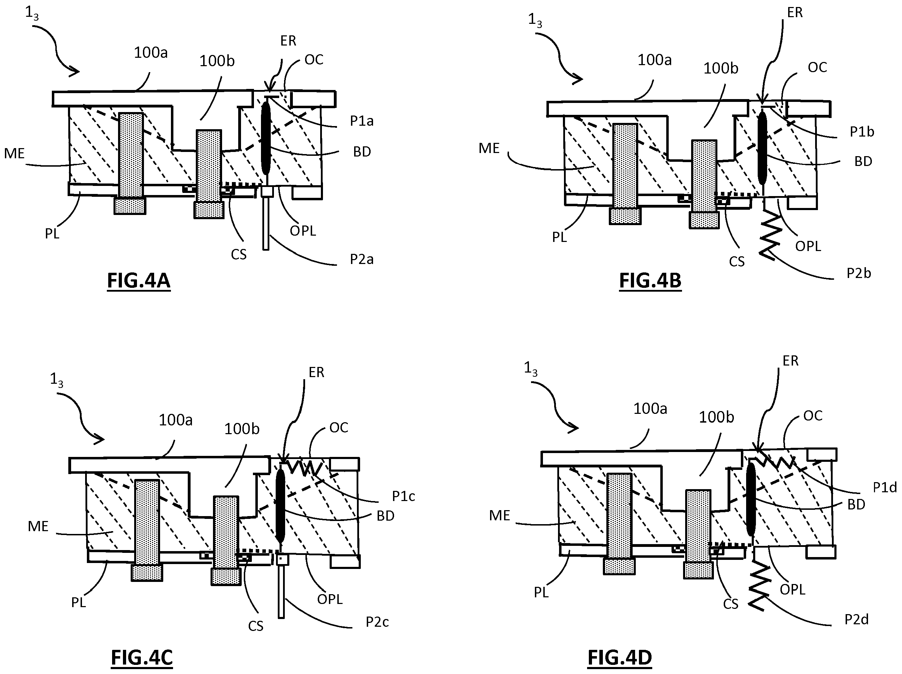

En référence maintenant aux figures 4A à 4D, sont représentées respectivement quatre variantes différentes de l'élément rayonnant ER, selon lesquelles l'élément rayonnant ER est contenu seulement en partie dans le matériau d'étanchéité ME.

Sur la figure 4A, l'élément rayonnant ER contient une antenne imprimée P1a et une antenne quart d'onde P2a qui sont reliées ensemble par un conducteur (non représenté) recouvert d'un blindage BD et isolé électriquement de ce dernier. L'élément rayonnant ER est agencé en partie dans le matériau d'étanchéité ME de telle manière que, lorsque le couvercle 1₃ est en position fermée :
- l'antenne imprimée P1a s'étend par exemple longitudinalement dans l'ouverture traversante OC du couvercle 1₃, à environ 5 à 10 mm de la surface externe de la paroi 100a du couvercle 1₃,
- le blindage BD s'étend dans le matériau d'étanchéité ME vers l'intérieur de la chambre de visite CV, par exemple perpendiculairement à l'antenne imprimée P1a,
- l'antenne quart d'onde P2a s'étend à l'extérieur du matériau d'étanchéité ME, dans le prolongement du blindage BD, et vers l'intérieur de la chambre de visite CV, par exemple perpendiculairement à l'antenne imprimée P1a.

Le blindage BD est en outre relié à une rondelle crantée ou une cosse CS de type métallique, via un fil métallique conducteur FC.

Sur la figure 4B, l'élément rayonnant ER contient une antenne imprimée P1b et une antenne hélicoïdale P2b qui sont reliées ensemble par un conducteur (non représenté) recouvert d'un blindage BD et isolé électriquement de ce dernier. L'élément rayonnant ER est agencé en partie dans le matériau d'étanchéité ME de telle manière que, lorsque le couvercle 1₃ est en position fermée :
- l'antenne imprimée P1b s'étend par exemple longitudinalement dans l'ouverture traversante OC du couvercle 1₃, à environ 5 à 10 mm de la surface externe de la paroi 100a du couvercle 1₃,
- le blindage BD s'étend dans le matériau d'étanchéité ME vers l'intérieur de la chambre de visite CV, par exemple perpendiculairement à l'antenne imprimée P1a,
- l'antenne hélicoïdale P2b s'étend à l'extérieur du matériau d'étanchéité ME, dans le prolongement du blindage BD, et vers l'intérieur de la chambre de visite CV, par exemple perpendiculairement à l'antenne imprimée P1b.

Le blindage BD est en outre relié à une rondelle crantée ou une cosse CS de type métallique, via un fil métallique conducteur FC.

Sur la figure 4C, l'élément rayonnant ER contient une antenne hélicoïdale P1c et une antenne quart d'onde P2c qui sont reliées ensemble par un conducteur (non représenté) recouvert d'un blindage BD et isolé électriquement de ce dernier. L'élément rayonnant ER est agencé en partie dans le matériau d'étanchéité ME de telle manière que, lorsque le couvercle 1₃ est en position fermée :
- l'antenne hélicoïdale P1c s'étend par exemple longitudinalement dans l'ouverture traversante OC du couvercle 1₃, à environ 5 à 10 mm de la surface externe de la paroi 100a du couvercle 1₃,
- le blindage BD s'étend dans le matériau d'étanchéité ME vers l'intérieur de la chambre de visite CV, par exemple perpendiculairement à l'antenne hélicoïdale P1c,
- l'antenne quart d'onde P2c s'étend à l'extérieur du matériau d'étanchéité ME, dans le prolongement du blindage BD, et vers l'intérieur de la chambre de visite CV, par exemple perpendiculairement à l'antenne hélicoïdale P1c.

Le blindage BD est en outre relié à une rondelle crantée ou une cosse CS de type métallique, via un fil métallique conducteur FC.

Sur la figure 4D, l'élément rayonnant ER contient une antenne hélicoïdale P1d et une antenne hélicoïdale P2d qui sont reliées ensemble par un conducteur (non représenté) recouvert d'un blindage BD et isolé électriquement de ce dernier. L'élément rayonnant ER est agencé en partie dans le matériau d'étanchéité ME de telle manière que, lorsque le couvercle 1₃ est en position fermée :
- l'antenne hélicoïdale P1d s'étend par exemple longitudinalement dans l'ouverture traversante OC du couvercle 1₃, à environ 5 à 10 mm de la surface externe de la paroi 100a du couvercle 1₃,
- le blindage BD s'étend dans le matériau d'étanchéité ME vers l'intérieur de la chambre de visite CV, par exemple perpendiculairement à l'antenne hélicoïdale P1d,
- l'antenne hélicoïdale P2d s'étend à l'extérieur du matériau d'étanchéité ME, dans le prolongement du blindage BD, et vers l'intérieur de la chambre de visite CV, par exemple perpendiculairement à l'antenne hélicoïdale P1d.

Le blindage BD est en outre relié à une rondelle crantée ou une cosse CS de type métallique, via un fil métallique conducteur FC.

L'élément rayonnant ER qui vient d'être décrit en référence aux figures 3A, 3B et 4A à 4D peut bien entendu être installé à l'identique dans le matériau d'étanchéité ME du couvercle 1₂ représenté sur les figures 2A et 2B.

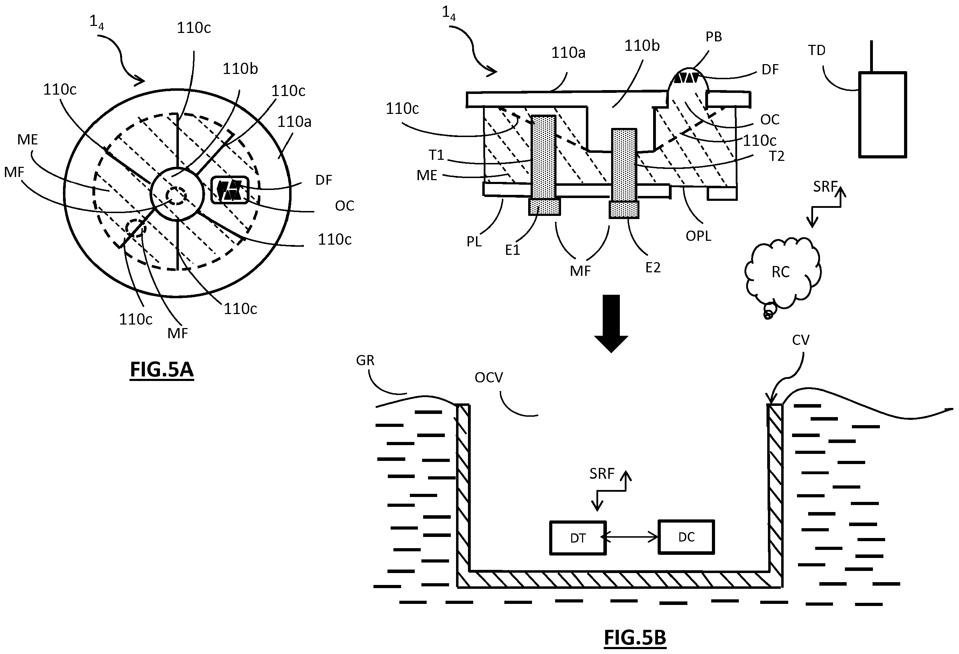

On va maintenant décrire un quatrième mode de réalisation du couvercle selon l'invention, en référence aux figures 5A et 5B.

Dans l'exemple représenté, le couvercle est désigné par la référence 1₄. Le couvercle 1₄ est par exemple identique au couvercle 1₁ des figures 1A et 1B. A cet effet, il comporte une paroi plane 110a, une âme centrale 110b et des nervures de renfort 110c identiques à celles du couvercle 1₁.

Le couvercle 1₃ se distingue du couvercle 1₁ par le fait que le matériau d'étanchéité ME présente en outre une protubérance PB qui, lorsque le couvercle 1₄ est en position fermée, est agencée en saillie hors de l'ouverture traversante OC.

La protubérance PB comporte un dispositif de diffraction DF. Dans l'exemple représenté sur les figures 5A et 5B, le dispositif de diffraction DF comprend un ou plusieurs éléments de diffraction de type métallique qui assurent la diffraction des signaux radio fréquence SRF émis par le dispositif DT de transmission radio fréquence. Dans l'exemple représenté, deux rangées de chacune quatre éléments de diffraction sont disposées dans la partie haute de la protubérance PB lorsque le couvercle 1₄ est en position fermée. Les éléments de diffraction représentés par des triangles noirs sur les figures 5A et 5B sont configurés pour avoir différents angles et sont positionnés les uns par rapport aux autres dans le matériau d'étanchéité ME de façon irrégulière.

Ainsi, des copeaux métalliques peuvent jouer le rôle d'éléments de diffraction. Les copeaux métalliques sont généralement issus de l'usinage de pièces sur des machines-outils et ont souvent la forme d'une spirale. En sélectionnant (ou en réalisant) des copeaux métalliques ayant la forme d'une seule spire, ils sont alors introduits dans le matériau d'étanchéité ME.

Un tel agencement d'un dispositif de diffraction DF en saillie sur le couvercle 1₄ permet avantageusement de générer des diffractions qui favorisent la propagation des signaux radio électriques selon au moins deux directions présentant chacune un angle de valeur faible (par exemple 3 à 5 degrés) par rapport à une droite qui peut-être par exemple :
- horizontale, dans le cas où le couvercle 1₄ en position fermée s'étend horizontalement, comme dans le cas des figures 5A et 5B,
- verticale, dans le cas où le couvercle en position fermée s'étend verticalement.

La protubérance PB incorporant de tels éléments de diffraction qui vient d'être décrite en référence aux figures 5A et 5B peut bien entendu constituer également le matériau d'étanchéité ME du couvercle 1₂ représenté sur les figures 2A et 2B et du couvercle 1₃ représenté sur les figures 3A, 3B et 4A à 4D.

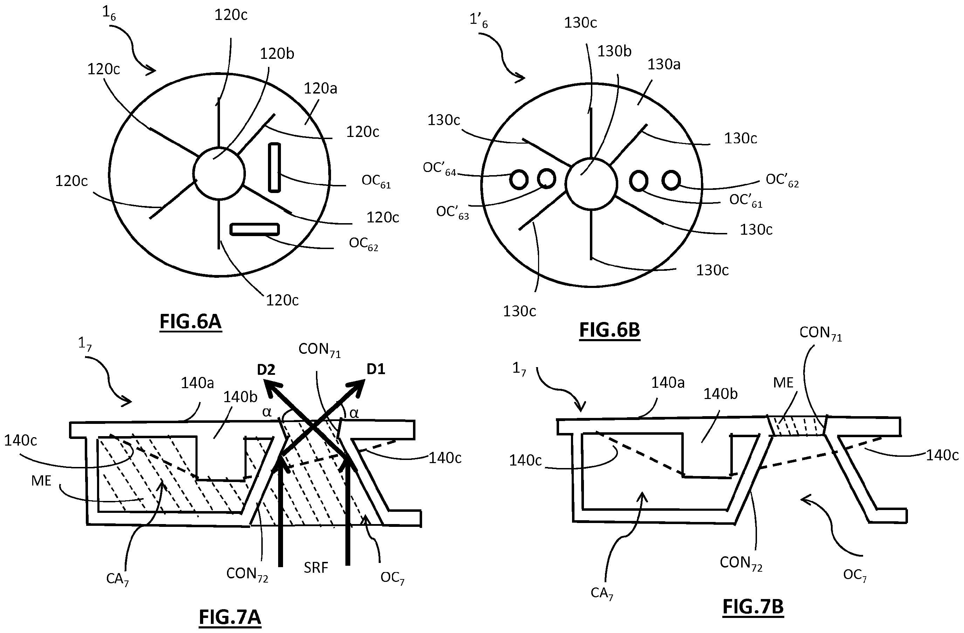

On va maintenant décrire, en référence aux figures 6A et 6B, deux variantes de réalisation des couvercles décrits ci-dessus.

Dans l'exemple représenté sur la figure 6A, le couvercle, représenté en vue de dessus, est désigné par la référence 1₆. Le couvercle 1₆ est par exemple identique aux couvercles décrits précédemment. A cet effet, il comporte une paroi plane 120a, une âme centrale 120b et des nervures de renfort 120c. Dans un souci de clarté de la figure 6A, le couvercle 1₆ est ici représenté sans le matériau d'étanchéité.

Le couvercle 1₆ de la figure 6A se distingue des couvercles décrits précédemment, par le fait qu'il comporte deux ouvertures traversantes OC₆₁ et OC₆₂, dont la particularité est qu'elles sont disposées perpendiculairement l'une par rapport à l'autre de manière à favoriser la propagation aussi bien de la composante verticale du signal radio fréquence SRF que de sa composante horizontale.

Dans l'exemple représenté, les ouvertures traversantes OC₆₁ et OC₆₂ ont chacune une section rectangulaire et sont de forme longitudinale. Selon d'autres exemples non représentés, la section de ces ouvertures traversantes peut être cylindrique, conique, ovale, etc...La taille, la forme et le positionnement des ouvertures traversantes OC₆₁ et OC₆₂ dépendent des contraintes mécaniques souhaitées pour le couvercle 1₆.

Selon d'autres exemples, le couvercle 1₆ pourrait être percé d'autres ouvertures traversantes de forme et/ou de section et/ou de taille différente ou non de celle des ouvertures traversantes OC₆₁ et OC₆₂.

Dans l'exemple représenté sur la figure 6B, le couvercle, représenté en vue de dessus, est désigné par la référence 1'₆. Le couvercle 1'₆ est par exemple identique aux couvercles décrits précédemment. A cet effet, il comporte une paroi plane 130a, une âme centrale 130b et des nervures de renfort 130c. Dans un souci de clarté de la figure 6B, le couvercle 1'₆ est ici représenté sans le matériau d'étanchéité.

Le couvercle 1'₆ de la figure 6B se distingue des couvercles décrits précédemment, par le fait qu'il comporte quatre ouvertures traversantes OC'₆₁, OC'₆₂, OC'₆₃, OC'₆₄ qui sont disposées par exemple en ligne, assurant ainsi une propagation plus importante du signal radio fréquence SRF.

Dans l'exemple représenté, les ouvertures traversantes OC'₆₁, OC'₆₂, OC'₆₃, OC'₆₄ ont chacune une section cylindrique. Selon d'autres exemples non représentés, la section de ces ouvertures traversantes peut être rectangulaire, conique, ovale, etc...La taille, la forme et le positionnement de ces ouvertures traversantes dépendent des contraintes mécaniques souhaitées pour le couvercle 1'₆.

Selon d'autres exemples, le couvercle 1'₆ pourrait être percé d'autres ouvertures traversantes de forme et/ou de section et/ou de taille différente ou non de celle des ouvertures traversantes OC'₆₁, OC'₆₂, OC'₆₃, OC'₆₄. En variante, les ouvertures traversantes OC'₆₁, OC'₆₂, OC'₆₃, OC'₆₄ pourraient être chacune de forme et/ou de taille et/ou de section différente et être positionnées de façon différente de la figure 6B.

On va maintenant décrire, en référence aux figures 7A et 7B, deux variantes de réalisation du couvercle représenté sur les figures 2A et 2B.

Dans l'exemple représenté sur la figure 7A, le couvercle, représenté en vue de coupe, est désigné par la référence 1₇. Comme sur les figures 2A et 2B, le couvercle 1₇ présente une paroi 140a, une âme centrale 140b, des nervures de renfort 140c et une ouverture traversante OC₇. La paroi 140a forme une cavité CA₇ remplie du matériau d'étanchéité ME précité. Dans l'exemple représenté, la section de la cavité CA₇ est trapézoïdale.

Le couvercle 1₇ se distingue de celui de la figure 2B en ce sens que la surface interne de l'ouverture traversante OC₇ comporte deux portions coniques CON₇₁ et CON₇₂ dont les sommets se rejoignent. Une telle conformation de la surface interne de l'ouverture OC₇ permet de conférer au matériau d'étanchéité ME injecté dans la cavité CA₇ une tenue mécanique naturelle. En outre, une telle conformation de la surface interne de l'ouverture OC₇ permet de mieux réfléchir le signal radio fréquence SRF vers l'extérieur et de manière sensiblement parallèle à la paroi 140a, par exemple selon les deux directions D1, D2 représentées sur la figure 7A et présentant chacune un angle α de valeur faible (par exemple 3 à 5 degrés) par rapport à la surface externe de la paroi 140a du couvercle 1₇.

Bien que la section des portions coniques CON₇₁ et CON₇₂ soit ici rectangulaire, dans d'autres exemples de réalisation, la section de ces portions coniques pourrait être carrée, circulaire ou autres.

Dans l'exemple de la figure 7B, le couvercle désigné par la référence 1'₇ est identique au couvercle 1₇ à la différence près que le matériau d'étanchéité ME est injecté uniquement dans la première portion conique CON₇₁ de l'ouverture OC₇.

## Revendications

1. Couvercle pour chambre de visite (CV), ladite chambre étant pourvue d'une ouverture d'accès (OCV) étant adaptée pour contenir un dispositif de transmission (DT) sans fil de signal radio fréquence, ledit couvercle comprenant une paroi (1a) destinée à recouvrir l'ouverture d'accès de la chambre de visite lorsque le couvercle est en position fermée,
**caractérisé en ce que** la paroi du couvercle est percée d'au moins une ouverture traversante (OC) remplie d'un matériau d'étanchéité (ME) du couvercle, ledit matériau étant monobloc et s'étendant sur la surface de la paroi du couvercle qui est orientée en direction de l'intérieur de la chambre de visite lorsque le couvercle est en position fermée, de sorte que le dispositif de transmission de signal radio fréquence est uniquement séparé de l'extérieur de la chambre par le couvercle, ledit matériau étant constitué d'une matière transparente à la propagation d'un signal radio fréquence (SRT) transmis depuis et/ou vers le dispositif de transmission.

2. Couvercle selon la revendication 1, dans lequel la paroi du couvercle est percée de deux ouvertures traversantes longitudinales (OC₆₁, OC₆₂) qui sont disposées perpendiculairement l'une par rapport à l'autre.

3. Couvercle selon la revendication 1 ou la revendication 2, dans lequel le matériau d'étanchéité (ME) contient au moins un élément rayonnant (ER).

4. Couvercle selon la revendication 3, dans lequel ledit au moins un élément rayonnant (ER) comprend des première et deuxième parties (P1, P2) reliées ensemble par un élément conducteur recouvert d'un blindage (BD) et isolé électriquement dudit blindage, ledit au moins élément rayonnant étant agencé au moins en partie dans le matériau d'étanchéité (ME) de façon à ce que lorsque le couvercle est en position fermée :
- la première partie de l'élément rayonnant soit agencée, selon une orientation donnée par rapport à la paroi du couvercle, à proximité de l'extrémité de l'ouverture traversante du couvercle qui débouche vers l'extérieur du couvercle,
- la deuxième partie de l'élément rayonnant (ER) soit agencée, selon une orientation donnée par rapport à la paroi (1a) du couvercle, à proximité de l'extrémité de l'ouverture traversante qui débouche vers l'intérieur de la chambre de visite (CV),
- ledit blindage (BD) étant en outre relié à la paroi du couvercle formant masse.

5. Couvercle selon l'une quelconque des revendications 1 à 4, dans lequel le matériau d'étanchéité (ME) du couvercle comporte une protubérance (PB) à l'extrémité de l'ouverture traversante qui débouche vers l'extérieur du couvercle, lorsque le couvercle est en position fermée, ladite protubérance incorporant un dispositif de diffraction (DF).

## Patentansprüche

1. Deckel für einen Kontrollschacht (CV), wobei der Schacht mit einer Zugangsöffnung (OCV) versehen ist, die geeignet ist, eine Vorrichtung zur drahtlosen Übertragung eines Funksignals (DT) zu enthalten, wobei der Deckel eine Wand (1a) enthält, die dazu bestimmt ist, die Zugangsöffnung des Kontrollschachts zu bedecken, wenn der Deckel in geschlossener Stellung ist,
**dadurch gekennzeichnet, dass** die Wand des Deckels mit mindestens einer Durchgangsöffnung (OC) versehen ist, die mit einem Dichtungsmaterial (ME) des Deckels gefüllt ist, wobei das Material einstückig ist und sich auf der Fläche der Wand des Deckels erstreckt, die in Richtung des Inneren des Kontrollschachts ausgerichtet ist, wenn der Deckel in geschlossener Stellung ist, so dass die Funksignal-Übertragungsvorrichtung von der Außenumgebung des Schachts nur durch den Deckel getrennt ist, wobei das Material aus einem für die Ausbreitung eines von und/oder zu der Übertragungsvorrichtung übertragenen Funksignals (SRT) durchlässigen Stoff besteht.

2. Deckel nach Anspruch 1, wobei die Wand des Deckels mit zwei länglichen Durchgangsöffnungen (OC₆₁, OC₆₂) versehen ist, die lotrecht zueinander angeordnet sind.

3. Deckel nach Anspruch 1 oder Anspruch 2, wobei das Dichtungsmaterial (ME) mindestens ein strahlendes Element (ER) enthält.

4. Deckel nach Anspruch 3, wobei das mindestens eine strahlende Element (ER) erste und zweite Teile (P1, P2) enthält, die von einem mit einer Abschirmung (BD) bedeckten und elektrisch von der Abschirmung isolierten leitenden Element miteinander verbunden werden, wobei das mindestens eine strahlende Element mindestens zum Teil in dem Dichtungsmaterial (ME) angeordnet ist, damit, wenn der Deckel in geschlossener Stellung ist:
- der erste Teil des strahlenden Elements gemäß einer gegebenen Ausrichtung bezüglich der Wand des Deckels in der Nähe des Endes der Durchgangsöffnung des Deckels angeordnet ist, das zur Außenseite des Deckels mündet,
- der zweite Teil des strahlenden Elements (ER) gemäß einer gegebenen Ausrichtung bezüglich der Wand (1a) des Deckels in der Nähe des Endes der Durchgangsöffnung angeordnet ist, das zur Innenseite des Kontrollschachts (CV) mündet,
- wobei die Abschirmung (BD) außerdem mit der Wand des Deckels verbunden ist, die eine Masse bildet.

5. Deckel nach einem der Ansprüche 1 bis 4, wobei das Dichtungsmaterial (ME) des Deckels einen Vorsprung (PB) an dem Ende der Durchgangsöffnung aufweist, das zur Außenseite des Deckels mündet, wenn der Deckel in geschlossener Stellung ist, wobei der Vorsprung eine Beugungsvorrichtung (DF) umfasst.

## Claims

1. Inspection chamber (CV) cover, said chamber being provided with an access opening (OCV) being suitable for containing a wireless radiofrequency signal transmission device (DT), said cover comprising a wall (1a) intended to cover the access opening of the inspection chamber when the cover is in closed position,
**characterized in that** the wall of the cover is pierced with at least one through opening (OC) filled with a cover sealing material (ME), said material being of a single piece and extending over the surface of the wall of the cover which is oriented toward the inside of the inspection chamber when the cover is in closed position, such that the radiofrequency signal transmission device is only separated from the outside of the chamber by the cover, said material being composed of a material transparent to the propagation of a radiofrequency signal (SRT) transmitted from and/or to the transmission device.

2. Cover according to Claim 1, wherein the wall of the cover is pierced with two longitudinal through openings (OC₆₁, OC₆₂) which are disposed at right angles to one another.

3. Cover according to Claim 1 or Claim 2, wherein the sealing material (ME) contains at least one radiating element (ER).

4. Cover according to Claim 3, wherein said at least one radiating element (ER) comprises first and second parts (P1, P2) linked together by a conductive element covered with a shielding (BD) and electrically insulated from said shielding, said at least one radiating element being arranged at least partly in the sealing material (ME) so that, when the cover is in closed position:
- the first part of the radiating element is arranged, according to a given orientation with respect to the wall of the cover, in proximity to the end of the through opening of the cover which emerges toward the outside of the cover,
- the second part of the radiating element (ER) is arranged, according to a given orientation with respect to the wall (1a) of the cover, in proximity to the end of the through opening which emerges toward the inside of the inspection chamber (CV),
- said shielding (BD) being also linked to the wall of the ground-forming cover.

5. Cover according to any one of Claims 1 to 4, wherein the sealing material (ME) of the cover comprises a protuberance (PB) at the end of the through opening which emerges toward the outside of the cover, when the cover is in closed position, said protuberance incorporating a diffraction device (DF).
